# EUROPEAN PATENT APPLICATION

(11) **EP 3 029 911 A1**
(43) Date of publication of application: **08.06.2016**
(21) Application number: 14306945.8
(22) Date of filing: 04.12.2014
(51) Int. Cl.: H04L 29/08, G06F 17/30

(54) **Method, system and device for delivering a web application to a client**

(71) Applicant: ALCATEL LUCENT, 92100 Boulogne-Billancourt (FR)
(72) Inventor: Verzijp, Nico, 2018 Antwerpen (BE); Van Broeck, Sigurd, 2018 Antwerpen (BE); De Vleeschauwer, Bart, 2018 Antwerpen (BE)
(74) Representative: ALU Antw Patent Attorneys

(57) **Abstract**

The present invention relates to a method, system and related devices for delivering a web application to a client (C), said client (C) being coupled to an Origin Server (OS) via a proxy server (PS), said client (C) requesting said proxy server (PS) for a web application, said web application being composed of a main web resource RA and a plurality of dependent web resources said method comprising the steps of said client (C) sending a request for said web application to said proxy server (PS) and wherein said method further comprises the steps of said proxy server (PS) at receipt of said request for said web application fetching meta-information on said web application and said proxy server (PS) retrieving said main web resource and each dependent web resource of said plurality of dependent web resources based on said meta-information on said main web resource and said proxy server (PS) successively pushing each said web resource of said plurality of web resources succeeded by said main web resource to said client (C).

## Description

### FIELD OF THE INVENTION

The present invention relates to the field of delivering a web application to a client.

### TECHNICAL BACKGROUND OF THE INVENTION

Web object caches can be found at different network locations, e.g. in a Content Delivery Network (CDN) or in caching proxies. These Web caches typically operate at HTTP resource level. For each cache-able resource (HTML, script, image, etc.) the cache creates a unique cache-key. This key can subsequently be used to search and retrieve the cached resource from the cache. This is in essence a simple mapping and caches typically do not know any relationship between multiple resources. As such, these caches are mostly stateless and can be implemented very efficiently.

Web applications typically are composed of a main web resource and multiple dependent web resources (see e.g. http://httparchive.org/). When delivering such a web application to a client, the client needs to retrieve each of these web resources whereof the web application is composed of, i.e. the main web resource and all the dependent web resources. For each web resource of the web application, the client, e.g. a browser, will issue a request (if the requested web resource is not yet presently available in the browser cache).

For delivering a web application to a client, the client requests a proxy server to provide the web application's main resource to the client. The main resource typically is a HTML file. Such proxy server first checks the associated cache for the availability of that web application's main web resource in the cache. In case the requested main web resource is not available in the cache, the proxy server requests the origin server that hosts the web application, for providing that main web resource.

Upon receipt of the web application's main web resource, the proxy server forwards the main web resource to the client and additionally, the proxy server caches that main web resource at the coupled cache (assuming here that cache headers allow the resource to be cached).

At receipt of the web application's main web resource by the client, the client determines which dependent web resources are required by the web application for providing the client with the requested web application by parsing the received main web resource, i.e. the main HTML page of the requested web application. In the step of determining the dependent web resources needed to build up the requested web application, location information (i.e. URL) on the dependent web resources is determined.

Based on the dependency between the main web resource and the linked dependent web resources, the client successively requests each of the dependent web resources in the same manner as performed for the main web resource at the proxy server. This is an iterative process and dependent resources can on their turn refer to other dependent resources.

The proxy server first checks the coupled cache for the availability of the dependent web resource in the cache. In case the requested web resource is not available in the cache, the proxy server requests it from the origin server that hosts this dependent web resource. This can be the same origin as for the main web resource or it can be a second or further origin server that hosts the dependent web resource. The origin server is determined based on the URL present in the HTTP GET for that particular web resource.

Upon receipt of the dependent web resource, the proxy server forwards the dependent web resource to the client and additionally, the proxy server caches the received dependent web resource at the coupled cache.

Finally, when all necessary web resources are received, i.e. the main web resource and all of the dependent web resources, at the client, the client is able to fully construct and subsequently render such web application, including all of the web applications' interactivity features, to a user of the client.

Only after requesting of a web application by a client, at receipt of the response to the request for a web application, i.e. the receipt of the main web resource, the client is able to determine which resources, i.e. the dependent web resources, are required for providing the client with the requested web-application by parsing the response of request of the meant web application, i.e. the received main web resource.

Subsequently, such client typically requests in succession, each of the required web resources. At receipt of each of the requested web resources the client proceeds constructing the requested web application. At final receipt of the last needed dependent web resource the client is able to provide the entire web application as the client finally has all required information at its disposal.

Hence, it is inefficient to request each necessary web resource separately in succession, after discovering all required web resources for constructing a requested web application.

Separately requesting each of the required web resources for delivering the web application is time inefficient.

### SUMMARY OF THE INVENTION

An objective of embodiments of the present invention is to provide with a method, a system and related devices for delivering a web application to a client of the above known type but wherein the obtaining successive main web resources and dependent web resources is performed more efficiently and wherein the provisioning of web applications to a requesting client is accelerated.

According to an aspect of the invention, there is provided a method for delivering a web application to a client, said client being coupled to an origin server via a proxy server, said client requesting said proxy server for a web application, said web application being composed of a main web resource and a plurality of dependent web resources said method comprising the steps of:
- . said client sending a request for said web application to said proxy server; and wherein said method further comprises the steps of:
- . said proxy server at receipt of said request for said web application fetching meta-information on said web application; and
- . said proxy server retrieving said main web resource and each dependent web resource of said plurality of dependent web resources based on said meta-information on said main web resource; and
- . said proxy server successively pushing each said web resource of said plurality of dependent web resources succeeded by said main web resource to said client.

Still further an embodiment of the present invention relates to a method wherein said method further comprises:
- . said client storing each said dependent web resource of said plurality of web dependent resources together with said main web resource, at a storage; and
- . said client constructing/providing said web application based on each said web resource of said plurality of web resources successively fetched from a storage.

Another further embodiment of the present invention relates to a method wherein said method further comprises:
- said proxy server requesting, said web application from said originating server; and
- said proxy server at receipt of said main web resource determining said meta-information on said web application based on analyzing said main web resource;
- said proxy server after determining said meta-information on said web application, storing said meta information on said web application; and
- said proxy server at determining said meta-information on said web application, requesting each dependent web resource of said plurality of dependent web resources based on said meta-information on said web application from an originating server and
- subsequently storing said plurality of dependent web resources and said main web resource by said proxy server.

Still another further embodiment of the present invention relates to a method wherein said method further comprises:
- said proxy server at receipt of said dependent web resource determining said meta-information on said web application based on analyzing the main web resource and each said dependent web resource of said plurality of dependent web resources originating from a respective originating server; and
- said proxy server storing said meta information on said web application after discovering said meta-information on said respective dependent web application; and
- said proxy server requesting each further dependent web resource of said plurality of web resources based on said meta-information on said web application from an originating server; and
- said proxy server storing said each dependent web resource of said plurality of further dependent web resources.

In a further embodiment of the present invention said meta-information on said web application comprises information on each dependent web resource dependent directly or indirectly on said main web resource.

Still another further embodiment of the present invention relates to a Proxy Server for delivering a web application to a client, said client being coupled to an origin server via said proxy server, said web application being composed of a main web resource and a plurality of dependent web resources said proxy server comprising:
- . a protocol handler configured to receive a request for said web application from said client; and
- . a meta information handler, configured to fetch meta-information on said web application at receipt of said request for said web application; and
- . a cache handler, configured to retrieve said main web application and each dependent web resource of said plurality of web resources based on said meta-information on said web application determined by said meta information handler; and
- . said protocol handler, being additionally configured to successively push each said dependent web resource of said plurality of dependent web resources together with said main web resource to said client.
   A further embodiment of the present invention relates to a Proxy Server according to claim 6, wherein said protocol handler further is configured to request said web application from said originating server; and
- . said meta information handler further is configured to determine said meta-information on said web application based on analyzing said main web resource, at receipt of said main web resource provided by said originating server; and
- . said meta information handler further being configured to store said meta information on said web application after discovering said meta-information on said web application; and
- . said meta information handler further is configured to request each dependent web resource of said plurality of web resources based on said meta-information on said web application from an originating server; and
- . said cache handler further being configured to store said each dependent web resource of said plurality of dependent web resources and said main web resource.
   A further embodiment of the present invention relates to a Proxy Server according to claim 7, wherein said meta information handler further is configured to determine said meta-information on said web application based on analyzing each said dependent web resource, at receipt of a respective dependent web resource of said plurality of dependent web resources originating from a respective originating server; and
- . said meta information handler further being configured to store said meta information on said web application after discovering said meta-information on said respective dependent web application; and
- . said meta information handler further is configured to request each further dependent web resource of said plurality of web resources based on said meta-information on said web application from an originating server; and
- . said cache handler further being configured to store said each dependent web resource of said plurality of further dependent web resources.

Another further embodiment of the present invention relates to a Proxy server according to claim 5 or 6. wherein said meta-information on said web application comprises information on each dependent web resource dependent directly or indirectly on said main web resource.

Still a further embodiment of the present invention relates to a proxy server according to any of claims 6 to 9, wherein said proxy server comprises an acceleration list configured to store for a web application, an indication destined for said meta information handler to determine said meta-information on said web application based on analyzing said web application.

A final embodiment of the present invention relates to a Network element for use in the method according to claim 1, wherein said network element comprises a proxy server according to claim 6.
and to a Computer program product comprising software adapted to perform the method steps in according to any of claim 1-4 when executed on a data processing apparatus.

In this way, at request for a web application by a client to a proxy server, the proxy server, at receipt of the request for said web application, fetches meta-information on the web application, where after the proxy server, based on the meta information on said web application, retrieves said main web resource and each dependent web resource of said plurality of dependent web resources necessary from the coupled cache and the proxy server successively or at the at the same time pushes each dependent web resource of the plurality of dependent web resources together with the said main web application to said client.

The proxy server upon receipt of the request for a web application, fetches the meta information on the web application from a pre-populated storage included in, or associated to the proxy server. The proxy server hence has access to a set of meta information on a web application, where said meta information may comprise information on the main web resource and the dependent web resources needed to build up the requested web application which meta-information includes the dependency between the main web resource and the linked dependent web resources. This information may be pre-determined and pre-fetched subsequently and be maintained in a storage included in the proxy server, or associated with the proxy server.

Moreover, the proxy server, based on the fetched meta information on said web application, retrieves said main web resource and each dependent web resource of a plurality of web resources from a pre-populated storage included in, or associated to the proxy server. The proxy server hence has access to a set of web applications and associated main web resource and additional dependent web resources. This information may also be pre-fetched and maintained in a storage included in the proxy server or associated with the proxy server.

Hence, after such a request for a web application, the proxy server based on the meta information on the web application immediately retrieves the main web resource and associated dependent web resources as predetermined by the meta-information on the web application where each of the dependent web resource of said plurality of web resources succeeded by said main web resource are successively or at the at the same time pushed to said client. The client at receipt of the dependent web resources followed by the main web resource is able to store each dependent web resource of said plurality of web resources together with the main web resource at said client and to construct said web application immediately as each necessary web resource of said plurality of web resources is available at the client, e.g. in browser cache and can successively be fetched from the browser cache without requesting a remote proxy server. Hence, the obtaining of necessary web resources dependent on the requested application service is performed more efficiently due to the fact that less signalling between the client C, proxy server PS and a respective origin server OS is required, resulting in a faster receipt by the client C of all necessary web resources, i.e. the plurality of dependent web resources and the main web resource, and a subsequent accelerated provisioning of a requested web applications to a requesting client.

In another embodiment the client stores each web resource of the plurality of web resources at said client at receipt of these web resources, i.e. the dependent web resources and thereafter the main web resource, at receipt by said client C at a storage, e.g. in a cache of the client or a storage coupled to the client and subsequently to construct the web application immediately as each necessary web resource of said plurality of web resources is available at the client, e.g. in the cache or the coupled storage and can successively be fetched from the cache or storage without requesting a remote proxy server.

In a further embodiment of the present invention, the proxy server requests, at receipt of a trigger e.g. from an operator, or alternatively from an internal timeout mechanism, said web application from the originating server and the proxy server at receipt of the main web resource determines the meta-information on the web application based on the analyzing of the main web resource and additionally the proxy server after determining said meta-information on said web application, storing said determined meta information on said web application at a storage either included in the proxy server or associated with the proxy server.

Furthermore, the proxy server, at determining of the said meta-information on said web application, requests each dependent web resource of the plurality of dependent web resources based on the meta-information on the web application from an originating server and subsequently at receipt of such dependent web resource, the proxy server stores each dependent web resource of the said plurality of dependent web resources together with said main web application at a storage either included in the proxy server or associated with the proxy server.

The step of, at receipt of the web application, by the proxy server determining the meta-information on the web application, based on the analyzing of the main web resource may include the parsing and execution of the web application. The proxy server then may parse the main web resource, i.e. the main HTML page of the requested web application and determine each dependent web resource directly or indirectly dependent on the analyzed, main web resource.

The proxy server may also execute scripts and these scripts can lead to more dependent objects that are required. Script execution may be implemented by means of a headless browser included in the proxy server.

In this manner the meta information on a web application is (pre)determined and the necessary web resources are collected so that at request of a certain client for delivering a web application, the necessary web resources, i.e. the main web resource and the dependent web resources are already at the disposal of the proxy server. The necessary web resources can immediately after receipt of the request for the web application, be pushed towards the requesting client.

Hence in this way, the obtaining of main web resources and dependent web resources is performed more efficiently and wherein the provisioning of web applications to a requesting client is accelerated.

In still another embodiment of the present invention, the proxy server at receipt of said dependent web resource determines additional meta-information on said web application based on the analyzing of each dependent web resource of the plurality of dependent web resources, each originating from a respective originating server and the proxy server subsequently storing the additional meta information on the web application in a storage means after discovering the additional meta-information on the respective dependent web resource and the proxy server requesting each further dependent web resource of the plurality of web resources based on the additional meta-information on the web application from an originating server where after the proxy server stores each dependent web resource of the plurality of further dependent web resources in a storage means.

A further dependent web resource is a web resource that in turn is dependent on the dependent web resource that is analyzed for determining additional meta-information.

In this manner the additional meta information on further dependent resources of a web application is (pre)determined and moreover also the further dependent necessary web resources are collected so that at request of a certain client for delivering a web application, the necessary web resources, i.e. the main web resource and the dependent web resources (including the further dependent web resources) are already at the disposal of the proxy server. The necessary web resources can immediately after receipt of the request for the web application, be pushed towards the requesting client.

Hence in this way, the obtaining of main web resources and dependent web resources is performed more efficiently and wherein the provisioning of web applications to a requesting client is accelerated.

In a further alternative embodiment the meta-information on said web application comprises information on each web resource dependent directly or indirectly on web application where the meta-information identifies the respective web resource.

Such meta information may comprise a list of all resources that are linked to the web application directly or indirectly e.g. with a corresponding URL (uniform resource locator) but also may show the dependency between them.

Still another embodiment relates to an acceleration list AL configured to store for at least one web application an indication destined for said meta information handler MIH, to determine said meta-information on said web application (A). This acceleration list can be provided by an operator and is used to provide acceleration for the included web applications only.

The effects and advantages of the apparatus and systems according to embodiments of the present invention are substantially the same, *mutatis mutandis,* as those of the corresponding methods according to embodiments of the present inventions.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. This means that there exists a path between an output of A and an input of B which may be a path including other devices or means.

### BRIEF DESCRIPTION OF THE DRAWINGS

The above and other objects and features of the invention will become more apparent and the invention itself will be best understood by referring to the following description of an embodiment taken in conjunction with the accompanying drawings wherein:
Fig. 1 represents the functional structure of a system for delivering a web application to a client, comprising a client C, a proxy server PS and an originating server OS according to an embodiment of the present invention; and
Fig. 2 represents a functional representation of the proxy server PS according to an embodiment of the present invention; and
Fig. 3 represents a flow diagram of signaling between a client C, a proxy server PS and an originating server OS according to the prior art situation; and
Fig. 4 represents a flow diagram of signaling between a client C, a proxy server PS and an originating server OS according to an embodiment of the present invention and shows the delivery of multiple cached resources to the client C based on stored meta-information in the PS proxy server; and
Fig. 5 represents a flow diagram of signaling between a proxy server PS and an originating server OS according to an embodiment of the present invention and shows the initialization sequence for the meta-information present in the PS; and
Fig. 5b represents a flow diagram of signaling between a proxy server PS and an originating server OS according to an embodiment of the present invention which show the analysis phase of the mean web resource RA.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

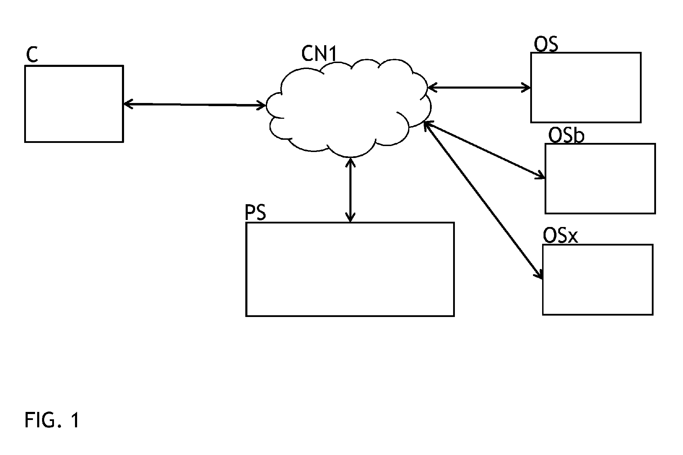

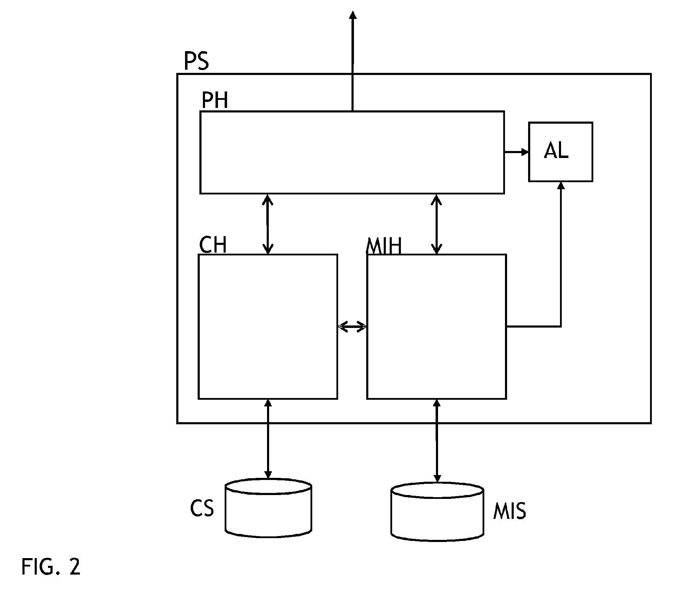

In the following paragraphs, referring to the drawing in FIG.1, an implementation of the system for delivering a web application A to a client C where the client C is coupled to an Origin Server OS via a proxy server PS, at request of the client C according to an embodiment of the present invention is described. In a further paragraph, all connections between mentioned elements are defined. Subsequently all relevant functional means of the proxy server PS as presented in FIG.2 are described followed by a description of all interconnections.

In the succeeding paragraph the actual execution of the system is described.

A first essential element of the system is a client C, which typically is a browser at a computing device configured to request a web application.

The client may be an IP connected computer terminal with a browser application for requesting a web application or alternatively may be a connected television, tablet PC, other PC such as a fixed PC or laptop PC, smart phone, each with an installed browser application.

Further, the system comprises a proxy server PS that is a server that couples a plurality of clients to CN1, which can be the internet or a private IP network.

Alternatively the proxy server PS may be a server in a content delivery network or alternatively be a virtualization of the server functionality in a cloud environment, or be a process distributed over several devices.

The client C and the proxy server PS communicate by means of the HTTP2 protocol. HTTP2 allows to push additional resources towards the requesting client, based on an initial client request. These pushed resources are linked to the initial client requests and cannot be pushed without it. Pushed resources are normally stored in the client's cache. The client can refuse the pushed resources in case it has already a copy of it cached.

Finally there is at least one origin server OS, OS_{B},OSₓ that is able to provide a web application to a client at request of such client C. The origin server for instance hosts the web application A that in fact is composed of web resources RA, RB, RC and RD. Most of these web resources will originate from the same origin OS, but some of the dependent resources may originate from a different origin OSₓ. Web application A for instance is www.alcatel-lucent.com.

Origins are linked to domains and in FIG.1 an origin server handles a single domain. In no way, it is directly linked to physical servers (e.g. the origin for www.alcatel-lucent.com can be hosted by multiple servers that cooperate or are load balanced and vice-versa a physical server can server multiple domains). The web application provider can host multiple domains. Typically all resources that are tightly linked with the web application will be served by origin servers directly linked to the web application provider (e.g. www.alcatel-lucent.com and images.alcatel-lucent.com). Some 3^{rd} party assets may be delivered by other origin servers.

The proxy server PS and client C may be coupled over a suitable communication network CN1 optionally containing a concatenation of an access network such as a digital subscriber line access network with coupled DSL modems or a cable network, a mobile communication access network with connected Smartphone or tablet devices or other suitable communications network and core internet network etc.

In this embodiment each origin server OS, OS_{B}, OSx may be coupled via the communications network CN1 to the proxy server PS over any kind of suitable high speed connection (typically wired), with optical fibre or an Ethernet connection.

The origin server OS, OS_{B},..OSx and the proxy server PS communicate by means of the HTTP protocol. The version of HTTP is of no significance for embodiments of the present invention. It may be standard HTTP1.1, which is what proxies use today. In that case, the proxy server PS needs to do a protocol translation from HTTP1 to HTTP2. This is a function that the protocol handler PH in FIG.2 may perform in addition. This translation is not necessary in case HTTP2 is also used between the PS and one of the OSx. Remark that some OS may support HTTP2 and others do not. In case an Origin Server OS supports HTTP2, the same mechanism described here between a PS and a client could also be used between the PS and the OS, i.e. dependent resources can be pushed from the origin server OS towards the proxy server PS.

Such a Web application is an application program that is stored on a remote server, i.e. the origin server, and delivered over the communication network CN1 towards a browser.

A first essential means of the proxy server PS is the protocol handler PH that is configured to receive a request for said web application A from the said client C and a meta information handler MIH, that in turn is configured to fetch meta-information on the web application A from a meta information storage MIS at receipt of said request for said web application A. The meta information storage MIS is a storage device, that is located either in the proxy server PS or alternatively externally to the proxy server PS. Such meta information storage MIS may be a hard-drive or a memory device that stores or caches meta-information on web applications in this specific case on web application A: e.g. being www.alcatel-lucent.com.

A further essential means of the proxy server is a cache handler CH, that is configured to store and retrieve the main web resource RA and each dependent web resource RB, RC, RD resp. in or from a resource storage CS. Each resource has its own proper cache key which is applied for retrieving the web resource.

This resource storage CS may also be located in the proxy server but alternatively may also be located externally to the proxy server PS. The resource storage CS may be a hard-drive or a memory device that stores or caches the main web resource and each of the dependent web resources of the plurality of web resources RB, RC, RD the web application A. The resource storage CS may also comprise further web resources that are dependent on one or more other web applications.

The protocol handler PH additionally is configured to successively push each dependent web resource of the plurality of web resources RB, RC, RD together with the main web resource RA to the client C.

The meta information handler MIH of the proxy server additionally may be configured to determine said meta-information on said web application A, based on analysis of the main web resource RA, at receipt of this main web resource RA from the originating server OS. The meta information handler MIH further may also be configured to store said meta information on said web application A in a storage means MIS after discovering the meta-information on said main resource RA. The determining of the meta information may be performed by executing the main web resource RA, i.e. parsing the main HTML page of the requested main web resource, i.e. www.alcatel-lucent.com for discovering the dependent web resources which are needed to build up the requested web application. The meta-information on said main web resource comprises information on each web resource dependent directly or indirectly on web application A. The meta-information handler MIH also does script parsing and resources discovered via scripts can be seen as indirectly dependent.

Script execution may be implemented by means of a headless browser included in the proxy server. The meta information handler MIH may be implemented by means of a headless browser as disclosed at http://phantomjs.org/. Such headless browser takes as an input the Uniform Resource Locator of a main or dependent web resource and analyzes this by means of HTML parsing, CSS analysis, and or JS execution an output results which includes meta information on the web resource which meta information may be shaped in a HAR file.

Further, the meta information handler MIH is configured to request each dependent web resource of the plurality of web resources i.e. web resources RB, RC, RD based on the meta-information on the main web resource from the originating server OS, and subsequently to store each of the plurality of dependent web resources RB, RC, RD by the proxy server PS in a resources storage CS.

The meta information handler MIH further is configured to determine additional meta-information on the web application A based on analyzing each said dependent web resource RB,RC,RD , at receipt of a respective dependent web resource of said plurality of dependent web resources RB,RC,RD originating from an originating server OS. and the meta information handler MIH further being configured to store said meta information on said web application A in a storage means MIS after discovering the additional meta-information on said respective dependent web resource RB, RC, RD.

The protocol handler PH further is configured to request each further dependent web resource of said plurality of web resources RB, RC, RD as instructed by the MIH based on the additional meta-information on said web application from an originating server. The cache handler CH further is configured to store said each dependent web resource of said plurality of further dependent web resources in a resource storage means CS.

Moreover, the proxy server may comprise an acceleration list AL configured to store for at least one web application an indication, where the indication is destined for said meta information handler MIH to determine the meta-information on the web application A based on analyzing the meant web application A.

It is to be noted that although such system usually comprises a plurality of such clients that are connected to the proxy server, for reasons of simplicity only one single client C is disclosed.

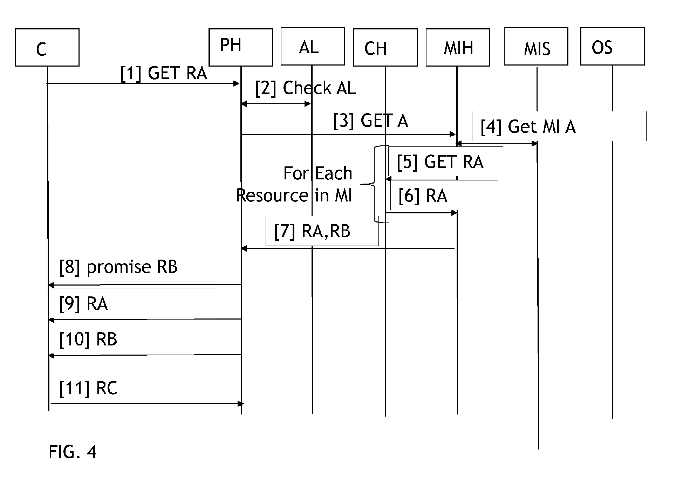

The protocol handler PH of the proxy server has an input/output-terminal that is at the same time an input/output-terminal of the proxy server PS. The protocol handler PH further is coupled with an input/output to an input/output of the meta information handler MIH that in turn is coupled to an internal or external meta information storage MIS. The protocol handler PH further is coupled with an input/output to an input/output of the cache handler CH that in turn is coupled to an internal or external resources caching storage CS. Finally the protocol handler PH is coupled with an output to an input of the acceleration list AL that in turn is coupled with an input to an output of the meta information handler MIH. Finally the meta information handler MIH is coupled with an input/output to an input/output to the cache handler CH. In order to explain the present invention first it is assumed that a client C, i.e. an active browser e.g. Internet Explorer application is running on a personal computer. A user of the client C, i.e. the browser, wishes to view the web application addressable by "www.alcatel-lucent.com". The signaling flow is presented in Fig.4. Client C sends a request for web application A, e.g. a "GET A" command, towards the proxy server PS. The protocol handler PH first checks the acceleration list AL. In case the web application A is listed, it directs the requests to the meta information handler MIH. In case it is not listed, it directs the request to the protocol cache handler CH. The meta information handler MIH will fetch meta-information on the web application A from the meta information storage MIS.

The meta information contains information on the dependent resources for main web resource RA and any further dependencies (as explained before).

Based on the meta information that is fetched from the Meta information storage MIS, the meta information handler MIH instructs the cache handler CH to retrieve the main web RA and each dependent web resource of said plurality of web resources RB, RC, RD which is derived from the fetched meta-information on the web application A. The cache handler CH subsequently retrieves the main web resource RA and each dependent web resource of said plurality of web resources RB, RC, RD from the resource storage SC. (See Fig. 4 where in 5] MIH checks CH for RA and in [6] CH returns RA and steps [5] and [6] are repeated for all dependent resources RB, RC.) While the proxy server PS can make sure that the main web resource RA is always present, it can happen that dependent resources were evicted from the CS and as such are not available anymore. In Fig.4 this is the case for web resource RC. The meta information handler MIH will not wait or ask RC towards the origin. Instead it will send back all resources that are currently cached towards the protocol handler (step [7] in Fig.4).

The Resource storage SC is pre-populated with web applications and corresponding web resources, i.e. the web resources whereof the web application is composed of. In case each of the web resource of the plurality of web resources RB, RC, RD together with said web application A are at the disposal of the protocol handler PH, the protocol handler PH successively pushes, e.g. by means of the HTTP2 protocol, each web resource of the plurality of web resources RB, RC, RD together with the requested web application A to said client C.

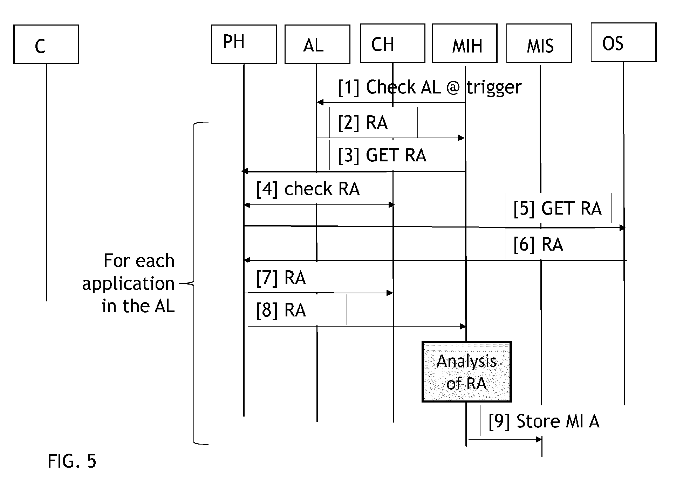

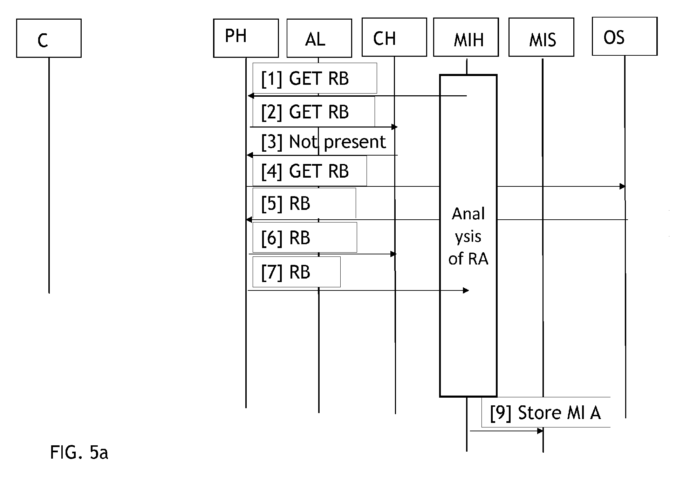

It is a crucial part of the invention that the proxy can immediately reply to the client with web resource RA and all dependent resources that the proxy currently has in its cache. The main benefit of the invention is that the proxy is able to inform the client of all dependent resources that are in its cache and to push these towards the client. It is to be ascertained that if web application A is present in the AL that the main web resource WR A is always present. This can be achieved by applying the initialization scenario as presented in Fig. 5. The web resource RA can be marked (with dedicated flag) so that cache handler CH does not evict it from the cache. Dependent resources (of which there can be a lot) are not marked and can be evicted from the cache. As such, for each RA that is part of the acceleration handler AL, the cache handler CH will always have web resource RA cached, plus a variable set of dependent web resources. Removal of RA from the cache CS is possible, but if we only allow that if A is also removed from the acceleration list AL.

In case, as is shown in Fig. 4 web resource RC is not present anymore (i.e. it was evicted from the cache).

[7] The meta information Handler MIH returns web resource RA and all available dependent resources (here RB) to the protocol handler PH. In steps [8] [9] [10] the protocol hander PH uses HTTP2 protocol for pushing the web resources towards client C. All dependent resources (RB here) are PROMISED firsts (i.e. Only headers) and subsequently main web resource RA is sent as a reply, followed by RB

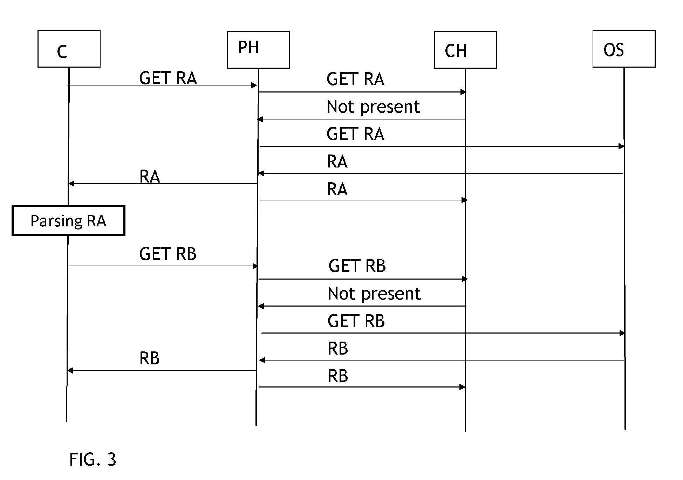

All dependent web resources (RB here) are sent and cached by the client. Subsequently, (see step [11]), the client C processes the main web resource (as it would do normally) and detects that
it still needs dependent web resource RC. Client C subsequently requests, the protocol handler PH to provide the dependent web resource RC. The scenario from that point onwards is the same
as Fig 3 i.e. as is performed in the current state of the art.

In this manner, in an embodiment of the present invention, the obtaining of necessary web resources dependent on the requested web application is performed more efficiently due to the fact that less signalling between the client C proxy server PS and a respective origin server OS is required, resulting in a faster receipt by the client C of all necessary web resources and a subsequent accelerated provisioning of a requested web application to a requesting client.

The earlier mentioned pre-population or initialization of the resources storage CS and meta-information storage MIS will be dealt with in the following situations:
At receipt of certain trigger at the meta information handler MIH, the meta information handler MIH issues a read request to the acceleration list AL. (see step 1, Fig.5)

Such trigger may be a specific time out (e.g. at midnight), be initiated by an operator, or coming from the protocol handler PH, which received for the first time a request for said web application A, where this request may be done by any client for the first time only, from said client C.

Subsequently the acceleration list AL responds with the first web application, i.e. the main web resource RA. The meta information handler MIH (see step [3]) acts as a client to the PH and asks for main web resource RA. The protocol handler PH (in step [4]) checks whether main web resource RA is available in the cache (which is not the case during in this initialization phase). As the main web resource RA is not available at the resource storage CS, the protocol handler PH (in step [5]) requests main web resource RA at the origin server. The origin server in step [6] responds with main web resource RA which is forwarded towards the protocol handler PH. Protocol handler PH, subsequently (in step [7]) stores the response, i.e. the main web resource RA in the cache and, in step [8], forwards the response, i.e. the main web resource RA to the meta information handler MIH.

The meta information handler MIH subsequently will determine the meta-information on the web application A based on analyzing the web application A, at receipt of said web application A from the originating server OS (through the protocol handler PH).

The meta information handler MIH, by parsing the received web application A, being www.alcatel-lucent.com, first discovers that web resources RB,RC,RD are necessary for delivering the web application A to a client.

It is to be noted that resources RB, RC and RD may belong to a same domain and hence may or may not be located at the same origin server OS. However, it may also be the case that web resources are located at different origins i.e. multiple origins.

The proxy server may also execute scripts and these scripts can lead to more dependent objects that are required. Script execution may be implemented by means of a headless browser included in the proxy server. The meta information handler MIH may be implemented by means of a headless browser as disclosed at http://phantomjs.org/. Such headless browser takes as an input the Uniform Resource Locator of a main or dependent web resource and analyzes this by means of HTML parsing, CSS analysis, and or JS execution and output results which include meta information on the web resource which meta information may be shaped in a HAR file.

The meta information handler MIH subsequently stores the meta information on web application A in a meta information storage MIS after discovering said meta-information on said web application A. (See step [9], Fig. 5)

Hence the meta information storage MIS amongst others contains with respect to web application A being www.alcatel-lucent.com, first that dependent web resources RB, RC,RD and main web resource RA are necessary for delivering the web application A to a client and in addition that each of the respective dependent web resources RB, RC, RD are obtainable from the respective originating servers based on the address information included the meta-information i.e. a URL for each web resource.

During analysis of main web resource RA, the meta information handler MIH discovers that resource RB is a dependent web resource and subsequently request the protocol handler PH in step [1] of Fig. 5a to provide with the dependent web resource RB. The protocol handler PH (in step [2] [3] checks if the dependent web resource RB is present in the resource cache CS (in this scenario it is not present). As the dependent web resource RB is not present in the resource cache CS, the protocol handler PH requests dependent web resource RB from the origin server (can be the same origin as for RA, but not necessarily). The origin server responds with the dependent web resource RB (see step [5]) followed by the protocol handler PH storing the dependent web resource RB in its cache storage CS (step [6]) and the protocol handler PH forwarding the dependent web resource RB to the meta information handler MIH (see step [7]). More resources can be dependent from RA and the MIH will request all of them. The meta information handler MIH also analyzes the dependent web resource RB and based on this analysis determines further dependent web resources that each depend from the dependent web resource RB. These further dependent web resources being identified in additional meta information on the web application. Each of the further dependent web resources then are requested at an origin server and subsequently forwarded to a cache handler that stores the further dependent web resources in the cache storage CS.

Steps [1] to [7] are repeated by the meta information handler MIH until all dependent resources are requested and analyzed. More dependent resources (RC) can be discovered inside RA or RB.
In general, the MIH acts like a client browser and finds all dependencies. When all dependent web resources are found, the MIH stores this dependency info inside the MIS.

The same may be valid for other web applications.

In this manner at receipt of each dependent web resource of the plurality of dependent web resources RB, RC, RD together with main web resource RA, the proxy server is able to, at a request of any client for delivering the web application A to provide such arbitrary client with the web application and each of the necessary web resources so that a client by means of a single request will be provided, by a proxy server according to the present invention, with all the needed information to factually deliver such web application A, i.e. the web application and each of the necessary web resources.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

Moreover, all statements herein reciting principles, aspects, and embodiments of the invention, as well as specific examples thereof, are intended to encompass equivalents thereof.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A method for delivering a web application (A) to a client (C), said client (C) being coupled to an Origin Server (OS) via a proxy server (PS), said client (C) requesting said proxy server (PS) for a web application (A), said web application being composed of a main web resource RA and a plurality of dependent web resources (RB,RC,RD) said method comprising the steps of:
- . said client (C) sending a request for said web application (A) to said proxy server (PS); and wherein said method further comprises the steps of:
- . said proxy server (PS) at receipt of said request for said web application (A) fetching meta-information on said web application (A); and
- . said proxy server (PS) retrieving said main web resource RA and each dependent web resource of said plurality of dependent web resources (RB,RC,RD) based on said meta-information on said main web resource; and
- . said proxy server (PS) successively pushing each said web resource of said plurality of web resources (RB,RC,RD) succeeded by said main web resource to said client (C).

2. A method according to claim 1, wherein said method further comprises:
- . said client (C) storing each said dependent web resource of said plurality of web dependent resources (RB,RC,RD) together with said main web resource (RA), at a storage; and
- . said client (C) constructing said web application (A) based on each said web resource of said plurality of web resources (RB, RC, RD) successively fetched from a storage.

3. A method according to claim 1 or 2, wherein said method further comprises:
- said proxy server (PS) requesting, said web application (A) from said originating server (OS); and
- said proxy server (PS) at receipt of said main web resource (RA) determining said meta-information on said web application (A) based on analyzing said main web resource (RA);
- said proxy server (PS) after determining said meta-information on said web application (A), storing/maintaining said meta information on said web application (A); and
- said proxy server (PS) at determining said meta-information on said web application (A), requesting each dependent web resource of said plurality of dependent web resources (RB,RC,RD) based on said meta-information on said web application from an originating server (OS) and
- subsequently storing said plurality of dependent web resources (RB, RC, RD) and said main web resource (RA) by said proxy server (PS).

4. A method according to claim 3, wherein said method further comprises:
- said proxy server (PS) at receipt of said dependent web resource (RB,RC,RD) determining said meta-information on said web application (A) based on analyzing the main web resource (RA) and each said dependent web resource (RB,RC,RD) of said plurality of dependent web resources (RB,RC,RD) originating from a respective originating server (OS); and
- said proxy server (PS) storing said meta information on said web application (A) after discovering said meta-information on said respective dependent web application (RB, RC, RD); and
- said proxy server (PS) requesting each further dependent web resource of said plurality of web resources (RB,RC,RD) based on said meta-information on said web application from an originating server; and
- said proxy server (PS) storing said each dependent web resource of said plurality of further dependent web resources.

5. A method according to claim 1 or 3. wherein
said meta-information on said web application comprises information on each dependent web resource dependent directly or indirectly on said main web resource (RA).

6. Proxy Server (PS) for delivering a web application (A) to a client (C), said client (C) being coupled to a Origin Server (OS) via said proxy server (PS), said web application (A) being composed of a main web resource (RA) and a plurality of dependent web resources (RB,RC,RD) said proxy server (PS) comprising:
- . a protocol handler (PH) configured to receive a request for said web application (A) from said client (C); and
- . a meta information handler (MIH), configured to fetch meta-information on said web application (A) at receipt of said request for said web application (A); and
- . a cache handler (CH), configured to retrieve said main web application and each dependent web resource of said plurality of web resources (RB,RC,RD) based on said meta-information on said web application determined by said meta information handler (MIH); and
- . said protocol handler (PH), being additionally configured to successively push each said dependent web resource of said plurality of dependent web resources (RB,RC,RD) succeeded by said main web resource(RA) to said client (C).

7. Proxy Server (PS) according to claim 6, wherein said protocol handler (PH) further is configured to request said web application (A) from said originating server (OS); and
- . said meta information handler (MIH) further is configured to determine said meta-information on said web application (A) based on analyzing said main web resource (RA), at receipt of said main web resource (RA)); and
- . said meta information handler (MIH) further being configured to store said meta information on said web application (A) after discovering said meta-information on said web application (A); and
- . said meta information handler (MIH) further is configured to request each dependent web resource of said plurality of web resources (RB,RC,RD) based on said meta-information on said web application from an originating server (OS); and
- . said cache handler (CH) further being configured to store said each dependent web resource of said plurality of dependent web resources (RB,RC,RD) and said main web resource (A).

8. Proxy Server (PS) according to claim 7, wherein said meta information handler (MIH) further is configured to determine said meta-information on said web application (A) based on analyzing each said dependent web resource (RB, RC, RD), at receipt of a respective dependent web resource of said plurality of dependent web resources (RB, RC, RD) originating from a respective originating server; and
- . said meta information handler (MIH) further being configured to store said meta information on said web application (A) after discovering said meta-information on said respective dependent web application (RB,RC,RD); and
- . said meta information handler (MIH) further is configured to request each further dependent web resource of said plurality of web resources (RB,RC,RD) based on said meta-information on said web application from an originating server; and
- . said cache handler (CH) further being configured to store said each dependent web resource of said plurality of further dependent web resources.

9. Proxy server according to claim 5 or 6. wherein said meta-information on said web application comprises information on each dependent web resource dependent directly or indirectly on said main web resource (A).

10. proxy server (PS) according to any of claims 6 to 9, wherein said proxy server comprises an acceleration list (AL) configured to store for a web application, an indication destined for said meta information handler (MIH) to determine said meta-information on said web application (A) based on analyzing said web application (A).

11. Network element for use in the method according to claim 1, wherein said network element comprises a proxy server according to claim 6.

12. Computer program product comprising software adapted to perform the method steps in according to any of claim 1-4 when executed on a data processing apparatus.
